# EUROPÄISCHE PATENTSCHRIFT

(11) **EP 4 221 928 B1**
(45) Veröffentlichungstag und Bekanntmachung des Hinweises auf die Patenterteilung: **07.08.2024**
(21) Anmeldenummer: 21765859.0
(22) Anmeldetag: 16.08.2021
(51) Int. Cl.: B23K 26/03, B23K 26/24

(54) **VERFAHREN ZUM VERSCHWEISSEN VON BLECHTEILEN**
METHOD FOR WELDING SHEET METAL PARTS
PROCÉDÉ DE SOUDAGE DE PIÈCES MÉTALLIQUES

(30) Priorität: 01.10.2020 AT 508422020
(43) Veröffentlichungstag der Anmeldung: 09.08.2023
(73) Patentinhaber: ANDRITZ Soutec AG, 8413 Neftenbach (CH)
(72) Erfinder: STÄUBLI, Daniel, 5430 Wettingen (CH); KRONTHALER, Michael, 8184 Bachenbülach (CH)
(86) Internationale Anmeldenummer: PCT/EP2021/072748
(87) Internationale Veröffentlichungsnummer: WO 2022/069105

(56) Entgegenhaltungen:
- WO-A1-2014/026297
- US-A- 6 087 619
- NILSEN MORGAN ET AL: "Adaptive control of the filler wire rate during laser beam welding of squared butt joints with varying gap width", THE INTERNATIONAL JOURNAL OF ADVANCED MANUFACTURING TECHNOLOGY, SPRINGER, LONDON, vol. 102, no. 9, 21 February 2019 (2019-02-21), pages 3667 - 3676, XP036790868, ISSN: 0268-3768, [retrieved on 20190221], DOI: 10.1007/S00170-019-03325-W

## Beschreibung

Die vorliegende Erfindung betrifft ein Verfahren zum stumpfen Verschweißen von Blechteilen, insbesondere aber nicht ausschließlich im Karosseriebau nach dem Oberbegriff von Anspruch 1.

Zur Herstellung von Blechteilen im Karosseriebau werden moderne Fertigungsverfahren angewendet, welche aus einzelnen Blechtafeln - allenfalls nach Blechkantenvorbereitung - geschweißte Teile, sogenannte Tailored Blanks (TWB), herstellen. Bei bekannten Schweißverfahren, insbesondere beim Laserschweißen, werden Blechtafeln einem ortsfesten Schweißwerkzeug zugeführt und verschweißt. Heutzutage wird vor allem der Vorteil genutzt, dass Platinen aus verschiedenen Werkstoffgüten oder Blechdicken zusammengesetzt werden können. Dies ermöglicht, verschiedene Stellen des späteren Bauteils an lokale künftige Belastungen des Bauteils anzupassen, was anderenfalls zusätzliche Verstärkungsteile erfordern würde. In der Automobilindustrie werden heutzutage Door-Rings aus TWB hergestellt. Solche Door-Rings bestehen aus bis zu acht Einzelteilen, wobei die Spaltbildung aufgrund von Form- und Fertigungstoleranzen zwischen diesen Einzelteilen verschieden und auch die Blechdicke der Einzelteile unterschiedlich sind. Im Weiteren ist für eine effiziente Produktion die Tatsache erschwerend, dass sich die Spaltsituation von Door-Ring zu Door-Ring unterscheiden kann, wobei verschiedene Arten von Spaltsituationen auftreten können. Das Beherrschen von V-förmigen Spalten stellt dabei die größte Herausforderung dar.

Eine schlechte Schweißqualität hat zur Folge, dass bei Door-Ring Crash-Tests unerwünschte Nahtrisse entstehen können. Dieses Risiko kann in der Produktion von Door-Rings aus Sicherheitsüberlegungen nicht eingegangen werden, da ein Crash im realen Fall für die Automobilindustrie fatal wäre mit entsprechenden dramatischen Folgen. Bekannt sind zum heutigen Zeitpunkt Verfahren, um variable Spalte bis zu maximal 0.3 mm mittels Zugabe von Fülldraht zu schließen. Eine Herausforderung ist es, je nach Schweißaufgabe (Materialien der zu verschweißenden Bauteile) variable Spalte bis etwa 1 mm dynamisch mit Zusatzmaterial (Draht) und in hoher Schweißqualität zu schließen.

Bei bekannten Schweißverfahren, insbesondere beim Laserschweißen, gibt es zwei bekannte Methoden: Bei einer ersten Methode werden Blechtafeln exakt positioniert, gespannt und von einem beweglichen Schweißkopf verschweißt. Beim anderen Verfahren werden Blechtafeln einem ortsfesten Schweißwerkzeug zugeführt und verschweißt. Beide Methoden erfordern einen hohen Aufwand an die mechanische Präzision, um eine Spaltbreite von aktuell ca. maximal 0.3 mm zu verarbeiten.

In der Patentschrift US5328083 ist ein Verfahren und eine Vorrichtung zur Durchführung des Verfahrens beschrieben, wobei aber nicht offenbart wird, wie die genaue Positionierung des Schweißwerkzeuges im Vergleich zum aktuellen Nahtverlauf erfolgt. Dadurch können Ungenauigkeiten der Platinen und Positionsverschiebungen des Nahtverlaufes zu fehlerhaften Schweißnähten führen.

In der Europäischen Patentschrift EP 0817698 B1 wird ein Verfahren zum kontinuierlichen Stumpfnahtschweißen von Blechtafeln beschrieben, bei welchem die relative Lage der Blechtafeln und damit die Genauigkeit der Nahtfuge innerhalb eines vorgegebenen Toleranzbereiches eingehalten wird. Dabei wird bewusst auf eine mechanisch präzise Ausrichtung der miteinander zu verschweißenden Bleche verzichtet. Sondern hier wird die Spaltbreite und Spaltposition mittels Sensorik ermittelt und das Strahlwerkzeug dem Blechstoß der beiden Blechtafeln nachgeführt. Im Weiteren kann mit einem Regelkreis die Leistung des Schweißstrahls und die erforderliche Kühlleistung für den Schweißprozeß (Gas, Wasser) permanent angepasst werden. Ein solches System bedarf eines hohen Wartungsaufwandes.

Herausfordernd beim Laserschweißen sind Situationen, wo sich die Spaltsituation von Bauteil zu Bauteil unterscheiden kann, wobei verschiedene Spaltsituationen wie beispielsweise A-, V-, Parallel-, Null-Spalt oder Mischformen davon auftreten. Ein bekanntes Verfahren zur Bestimmung der Spaltmaße ist das Auflichtverfahren. Dabei wird über eine Lichtquelle Licht auf den Spalt gestrahlt, welches dann von der Metalloberfläche reflektiert und von einer Kamera, die auf der gleichen Seite der Bleche angeordnet ist wie die Lichtquelle, ausgewertet. Ein bekanntes Auflichtverfahren ist beispielsweise die Laserlinienauswertung. Dieses Verfahren beruht auf der Laser-Triangulation. Dabei wird eine Laserlinie auf die Oberfläche der beiden Blechplatinen projiziert. Die projizierte Laserlinie steht im Wesentlichen senkrecht zu den Blechkanten, die den Spalt bilden. Die reflektierte Laserlinie trifft abhängig von der Entfernung bzw. der Spaltform unter einem bestimmten Winkel auf eine Kamera. Durch Auswertung der gefilmten Laserlinie kann so die Spaltbreite ermittelt werde.

Allerdings kann ein solches System nicht immer die korrekten Spaltmaße liefern. Insbesondere wenn nicht sichergestellt werden kann, dass immer die gleiche Seite der Blechtafeln nach oben zeigt, kann dieses Meßsystem fehlerhafte Spaltmaße liefern.

Insbesondere liefern solche Systeme meist nur die Spaltbreite im oberen Bereich des Spaltes, lassen aber kaum Rückschlüsse auf die Spaltbreite in tieferen Regionen zu.
zu.

Große Spaltbreiten zwischen den beiden zu verschweißenden Blechen führen zu einem Verlust an absorbierter Laserenergie im Spalt, da ein Teil des Laserstrahls ungehindert durch den Spalt tritt. Mittels Defokussierens des Monofokus ist es zwar möglich, diesen Verlust in einem gewissen Maß zu reduzieren. Dabei reduziert sich aber zwangsweise auch die maximale Intensität des Laserstrahls.

Andererseits reduziert sich bei einem technischen Null-Spalt die Fähigkeit des Durchschweißens, also ein vollständiges Durchdringen der Metalldampfkapillare beim Laserstrahlschweißen. Dies kann entweder durch eine verringerte Schweißgeschwindigkeit oder aber durch eine erhöhte Laserleistung in gewissem Maße ausgeglichen werden. Zusammenfassend kann gesagt werden, dass in der Anwendung ein Spannungsfeld zwischen Spaltüberbrückbarkeit und Durchschweißfähigkeit entsteht. Um eine optimale Produktivität zu gewährleisten, werden die Laserstrahl-Quellen am Auslegungslimit der Laserleistung betrieben. Eine Änderung der Schweißgeschwindigkeit während der Schweißaufgabe ist in vielen Anlagenkonzepten aufgrund der Reaktionszeit nicht möglich. Dies führt im Allgemeinen zu einer verringerten Produktivität.

Um das Problem der Verarbeitbarkeit, des Effizienzverlustes und der Prozesssicherheit von breiten Schweißspalten zu lösen, wurden bis jetzt einige Ansätze untersucht. So verfolgt beispielsweise die Idee eines Scan-Trackers mit Monofokus den Ansatz, dass ein Laserstrahl mit kleinem Fokusdurchmesser (0.2 mm bis 0.3 mm) und hoher Intensität quer zur Schweißaufgabe pendelt. Abhängig von der gemessenen Spaltbreite wird die Amplitude sowie die Laserleistung variiert. Versuche mit der am Markt verfügbaren Systemtechnik zum Schweißen von Platinen zeigen allerdings, dass bei hohen Schweißgeschwindigkeiten von etwa 10 m/min die Periodenlänge der Pendelbewegung aufgrund der erreichbaren Frequenzen keine vollständige Überdeckung des umgeschmolzenen Materials gewährleistet. Um akzeptable Schweißnähte zu generieren, müsste die Schweißgeschwindigkeit deutlich reduziert werden, was unabhängig von Spalt oder Nullspalt zu einem Verlust an Produktivität führen würde.

Die Twin-Spot-Optik beim Laserstrahlschweißen, d.h. die Anwendung zweier räumlich getrennter Fokusse am Werkstück, ist eine Technik, die inzwischen den Sprung vom Labor in die Produktion geschafft hat. In der Patentschrift DE 101 13 471 B4 ist vorgesehen, dass der Laserstrahl mindestens zwei Fokussierpunkte im Schweißpunkt oder in räumlich geringem Abstand zum Schweißpunkt besitzt. Dabei werden die Abstände der Fokussierpunkte auf der Grundlage der Messung von einzelnen Parametern des Schweißprozesses, insbesondere der Schweißgeschwindigkeit und Schweißgüte, laufend variiert. Die Patentschrift CN203124961 bezieht sich auf Laserbearbeitungsvorrichtungen und betrifft einen rotierenden Twin-Spot-Optik-Laserbearbeitungskopf, der einen Laseremitter, ein Lichtführungsrohr zum Transportieren von Laserstrahlen und einen Fokussierspiegel zum Fokussieren der Laserstrahlen umfasst. Eine Strahltrennvorrichtung ist mit einer Antriebsvorrichtung verbunden, die in der Lage ist, die Strahltrennvorrichtung zu rotieren.

Eine Schweißvorrichtung mit Twin-Spot-Optik ist auch in der EP 3 572 178 A1 beschrieben.

Mit der Twin-Spot-Optik kann die Laserenergieverteilung auf beiden Seiten einer Schweißnaht flexibel verbessert werden und der Mangel einer unzureichenden Einzelfokus-Energieübertragung wird damit vermieden. Ferner ist die Strahltrennvorrichtung mit der Antriebsvorrichtung verbunden und kann entsprechend gedreht werden. Die Drehung des Doppelfokus kann dabei durch eine Drehung der gesamten Prozessoptik oder durch Drehen des Twin-Spot-Optik-Moduls erfolgen. Der große Vorteil dieses Verfahrens liegt in der Möglichkeit, die Leistungsverteilung an die Aufgabenstellung anzupassen und in Abhängigkeit der Prozessbedingungen, z.B. bei veränderten Spaltweiten, zu regeln. Dadurch wird ein hohes Maß an Flexibilität, vor allem aber eine hohe Prozeßstabilität und Schweißnahtqualität erreicht. Untersuchungen haben dennoch gezeigt, dass das Schweißen mit der Twin-Spot-Optik-Technik bei gleichem Leistungsniveau geringere Einschweißtiefen liefert als das Schweißen mit nur einem Laserstrahl. Aus fertigungstechnischer Sicht ist jedoch die Frage nach den optimalen Parametern für die Erzeugung der gewünschten Schweißnaht sehr eng mit den wirtschaftlichen Gesichtspunkten des Gesamtprozesses verknüpft. Die Effizienz des Prozesses und die Qualität der Schweißnaht sind demnach die zentralen Merkmale des Fügeverfahrens.

Wichtige Kriterien in einem Verfahren zum Schweißen von Tailored Blanks sind einerseits der Durchsatz der gesamten Anlage, das heißt, wie viele Teile pro Stunde unter Berücksichtigung einer akzeptablen Ausschussrate hergestellt werden können, und anderseits der Materialaufwand an Zusatzmaterial, um sowohl die Qualität des gesamten Verarbeitungsprozesses als auch die gewünschte Qualität der geschweißten Platinen mit vernünftigem technischem Aufwand und Zusatzmaterial sicherstellen zu können.

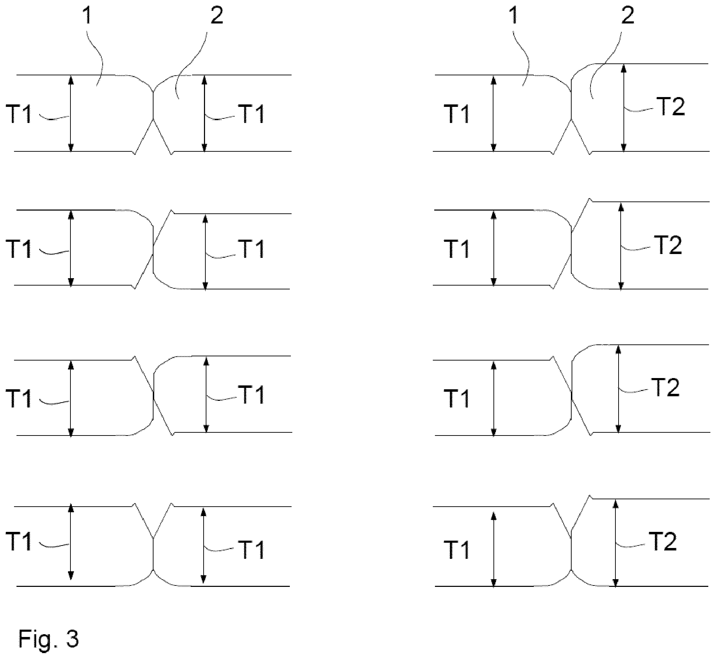

Nachteilig bei den vorab erwähnten Lösungen und Verfahren ist, dass in der Regel nur die Spaltbreite und Spaltposition gemessen werden, jedoch wird nicht die Spaltgeometrie berücksichtigt. Figur 3 zeigt diesbezüglich unterschiedliche Spaltgeometrien, die im Wesentlichen durch den Zuschnittprozess hervorgerufen werden. Auch wenn sich hier die beiden Blechplatinen in der Schnitteben in einem Punkt berühren und hier somit ein Nullspalt vorliegt, gibt es Bereiche, in denen sich die Platinen nicht berühren. Das Fehlvolumen in diesen Bereichen sollte idealerweise während des Schweißprozesses mit Material aufgefüllt werden, um ein optimales Schweißergebnis zu erhalten. Dazu muss aber nicht nur die Spaltbreite an einer Stelle, sondern auch die Spaltgeometrie ermittelt oder zumindest abgeschätzt werden. Bei bekannten Verfahren ist dies nicht der Fall dort wird die Spaltbreite nur an einer Stelle, meist im Bereich der Blechoberfläche ermittelt.

Die US 6 087 619 offenbart ein Verfahren nach dem Oberbegriff des Anspruchs 1, wobei die Spaltbreite mittels Auflichtverfahren vermessen wird. Die WO 2014/026297 offenbart ein Verfahren nach dem Oberbegriff des Anspruchs 1, wobei die Echtspaltbreite mittels Durchlichtverfahren vermessen wird.

Der vorliegenden Erfindung liegt daher die Aufgabe zu Grunde, ein Verfahren anzugeben, bei dem die vorstehend genannten Nachteile eliminiert werden.

Diese Aufgabe wird durch die in Anspruch 1 angegebenen Merkmale gelöst. Vorteilhafte Ausführungsvarianten sind in den abhängigen Ansprüchen angegeben.

Erfindungsgemäß wird also die Spaltbreite mittels Auflichtverfahren und die Echtspaltbreite mittels Durchlichtverfahren vermessen und so die Fehlfläche bzw. das Fehlvolumen im Spalt genauer abgeschätzt. Unter Echtspaltbreite versteht man den minimalen Abstand zwischen den beiden Blechkanten, also den lichten Bereich zwischen den Platinen.

Beim Auflichtverfahren handelt es sich vorzugsweise um ein Laserlinienverfahren, also um ein Lasertriangulationsverfahren, bei dem eine Laserlinie senkrecht zum Spaltverlauf auf die Blechoberflächen projiziert und die Form der Linie ausgewertet wird.

Beim Durchlichtverfahren wird Licht durch den Spalt gestrahlt und auf der gegenüberliegenden Blechseite von einer Kamera erfasst. Durch entsprechende Bildauswertung kann die lichte Weite (Echtspalt) zwischen den beiden Blechplatinen ermittelt werden.

Die hier vorgestellte Erfindung ermöglicht somit neben der Messung der Spaltbreite durch das Auflichtverfahren auch das Sichtbarmachen respektive das Messen des echten Spaltes zwischen miteinander zu verschweißenden Platinen. Somit kann das Fehlvolumen abgeschätzt und der Schweißprozess optimal gesteuert werden.

Vorzugsweise wird dem Schweißprozess auch Fülldraht zugeführt, durch die verbesserte Spaltmessung kann der optimale Bedarf an Zusatzmaterial (Fülldraht) besser ermittelt und die optimale Drahtmenge mittels Regelung der Zufuhrgeschwindigkeit von Zusatzdraht zugeführt werden, womit eine bessere Qualität der Schweißnaht und eine Reduktion der Menge von benötigtem Zusatzdraht erreicht werden kann.

Somit können mit dem vorgeschlagenen Verfahren die Produktionskosten insgesamt gesenkt werden.

Insgesamt ergibt sich mit dem vorgestellten Verfahren somit eine bessere Produktivität und eine bessere Prozessqualität im Vergleich zu anderen bekannten Verfahren.

Vorzugsweise erfolgt die Auswertung der Messresultate zur Bestimmung des Fehlvolumens zwischen den beiden Kanten mittels bildtechnischer Verfahren während des Schweißprozesses.

Es ist auch sinnvoll, wenn mittels einer weiteren Beleuchtung und dazugehörigen Kamera Löcher in der hergestellten Schweißnaht erkannt werden.

Vorzugsweise verwendet das Auflichtverfahren Lichtquellen mit monochromatischem Licht.

Es ist günstig, wenn die Spaltbreite und die Echt-Spaltbreite kontinuierlich gemessen und ausgewertet wird.

Noch bessere Ergebnisse lassen sich erzielen, wenn das Auflichtverfahren zur Messung der Spaltbreite und gegebenenfalls auch das Durchlichtverfahren zur Messung des Echtspaltes auf der Oberseite und der Unterseite der Blechplatinen (1,2) angewendet wird.

Das erfindungsgemäße Verfahren eignet sich besonders gut zur Herstellung von Tailored Blanks im Karosseriebau.

Die vorliegende Erfindung und auch die Probleme derzeitiger Messverfahren werden im Folgenden anhand von Ausführungsbeispielen unter Bezugnahme auf Zeichnungen weiter erläutert. Dabei zeigen:
- Fig. 1: zeigt in schematischer Darstellung ein Beispiel für den erfindungsgemäßen Laserschweißprozess als Seitenansicht;
- Fig. 2: zeigt eine Blechkante nach dem Schneideprozess im Querschnitt;
- Fig. 3: zeigt in schematischer Darstellung mögliche Formen von Schnittkanten im Querschnitt;
- Fig. 4: zeigt in schematischer Darstellung den Spalt zwischen zwei sich berührenden Blechplatinen (ohne Echtspalt) im Querschnitt;
- Fig. 5: zeigt in schematischer Darstellung im Querschnitt zwei sich nicht berührende Blechplatinen mit Echtspalt und Spaltbeleuchtung nach dem Stand der Technik;
- Fig. 6: zeigt wiederum in schematischer Darstellung die Spaltvermessung mittels Durchlicht:
- Fig. 7: zeigt in schematischer Darstellung den Spalt zweier sich nicht berührender Blechplatinen im Querschnitt;

Gleiche Bezugszeichen in den jeweiligen Figuren bezeichnen jeweils gleiche Merkmale.

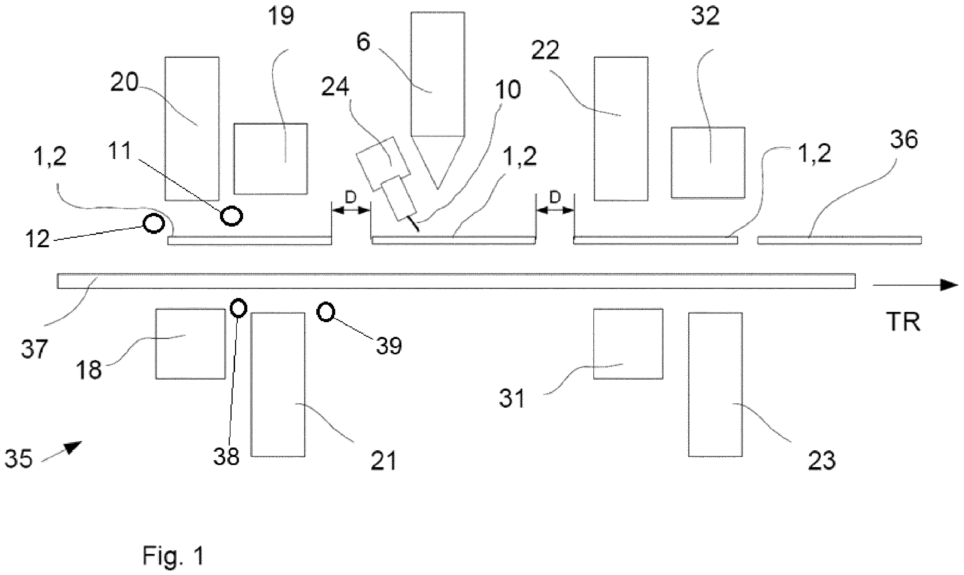

Fig. 1 zeigt ein Ausführungsbeispiel des erfindungsgemäßen Laserschweißprozesses 35 zur Bearbeitung von Blechplatinen 1,2 welche beispielsweise, aber nicht ausschließlich auf einer in Transportrichtung TR bewegbaren Fördereinheit 37 platziert werden. In einem ersten Prozeßschritt werden die Blechplatinen 1,2 mittels (nicht gezeigter) Zuführmittel auf der Fördereinheit 37 platziert und mittels (nicht gezeigter) Haltemittel festgehalten. Danach wird die Spaltposition und Spaltbreite ermittelt. Dies erfolgt mit Hilfe der oberen Kamera 20, optional auch mit der unteren Kamera 21. Zusätzlich sind den beiden Kameras 20, 21 jeweils gegenüberliegend eine untere Beleuchtung 18 und eine obere Beleuchtung 19 vorgesehen.

Der Abstand D zwischen je zwei Blechplatinen 1,2 ist abhängig vom Grundriss der zu verschweißenden Blechplatinen, wobei D bei rechteckigem Grundriss der Blechplatinen 1,2 klein gehalten werden kann und bei beispielsweise rhombenförmigem Grundriss der Blechplatinen 1,2 größer gewählt werden muss. In einem zweiten Prozeßschritt werden die Blechplatinen 1,2 mittels Schweißlaser 6 unter Beigabe von Fülldraht 10 durch die Fülldraht-Einheit 24 zu einer geschweißten Blechplatine 36 verbunden. In einem dritten Prozeßschritt wird die Beschaffenheit der Schweißnaht mit einem ortsfesten zweiten Qualitätssystem bestehend aus einer oberen Kamera 22 und einer unteren Beleuchtung 31 von oben und optional mit einem zusätzlichen ortsfesten Qualitätssystem (untere Kamera 23 und obere Beleuchtung 32) von unten überprüft. Anschließend wird die geschweißte Blechplatine 36 nach dem Lösen der (nicht gezeigten) Haltemittel vom Transportband entnommen.

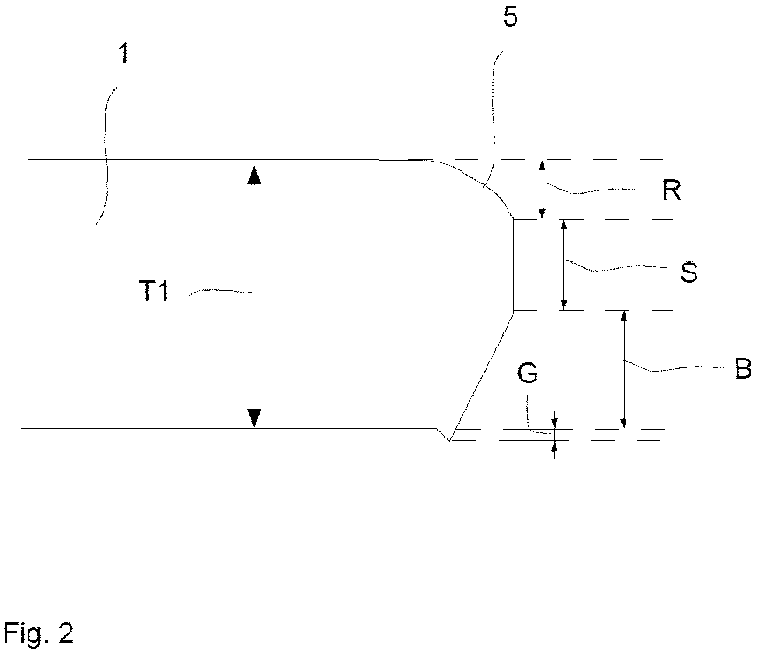

Fig. 2 zeigt in schematischer Darstellung beispielhaft die Kante 5 einer Blechplatine 1 mit der Blechdicke T1 nach dem Schneiden. Durch den Schneideprozess weist die Kante 5 den plastisch deformierten Rollover-Bereich R, den nicht deformierten Schnitt-Bereich S, den Bruch-Bereich B und den Grat G auf. Das Verhältnis von S zu B kann stark variieren.

Fig. 3 zeigt in schematischer Darstellung mögliche Formen von Schnittkanten bzw. unterschiedliche Spaltgeometrien. Wenn eine linke Blechplatine 1 und eine rechte Blechplatine 2 aneinandergeschoben werden, kann sich die Spaltgeometrie zwischen den beiden Blechplatinen 1,2 infolge der beim Schneideprozess plastisch verformten Kantenverläufe von Platine zu Platine ändern. Die Spaltgeometrie ist zudem abhängig davon, ob die Blechdicken T1, T2 der beiden Blechplatinen gleich oder ungleich sind. Man erkennt hier auch gut, dass sich die Spaltgeometrie in Abhängigkeit von der Lage der Blechplatinen 1,2 stakt ändert. Wenn beide beim Schneidprozess obenliegenden Seiten der Blechplatinen 1,2 auch beim Schweißprozess nach oben weisen, ergibt sich eine völlig andere Spaltgeometrie, als wenn eine oder beide beim Schneidprozess nach oben weisenden Seiten beim Schweißprozess nach unten weisen.

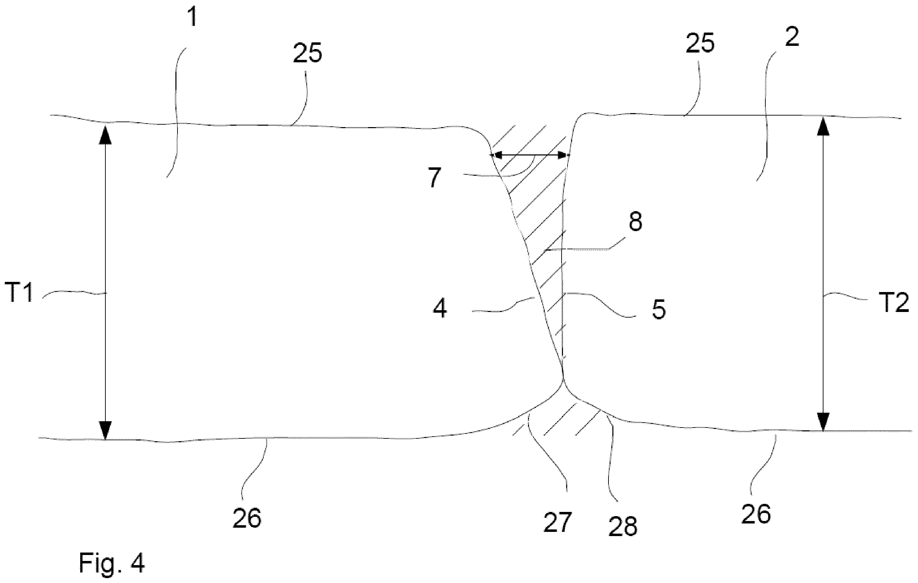

Fig. 4 zeigt in schematischer Darstellung als Querschnitt eine linke Blechplatine 1, welche die Blechdicke T1 aufweist, mit der Oberseite 25 und der Unterseite 26, und eine rechte Blechplatine 2, welche die Blechdicke T2 aufweist, mit der Oberseite 25 und der Unterseite 26. Die beiden Blechplatinen 1,2 berühren sich unten im Bereich Rollover-Links 27 und Rollover-Rechts 28. In diesem Bereich liegt also kein Spalt (kein Echtspalt). Mit der Spaltmessung mittels Auflichtverfahrens nach dem Stand der Technik wird die Spaltbreite 7 ermittelt. Diese ermittelte Spaltbreite 7 gibt in der Regel die Spaltbreite im oberen Bereich des Spaltes wieder. Die schraffierte Fläche bezeichnet die Fehlfläche 8 zwischen den beiden Blechplatinen 1,2. Da sich der Spalt hier im unteren Bereich schließt, kann über die gemessene Spaltbreite 7 die Fehlfläche 8 nur recht ungenau abgeschätzt werden.

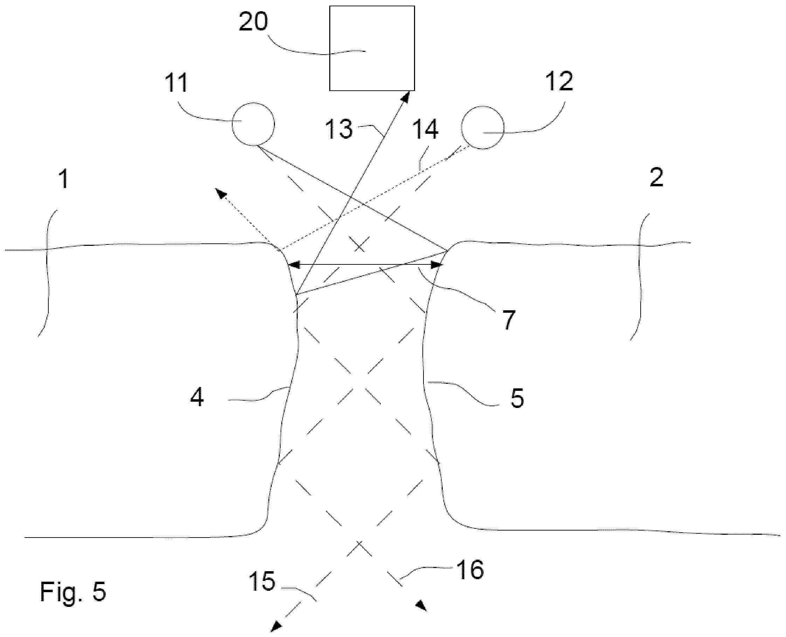

Fig. 5 zeigt in schematischer Darstellung eine Spaltmessung nach der Auflichtmethode. Die beiden Blechplatinen 1 und 2 berühren sich hier nicht, es liegt also ein Echtspalt vor. Als Echtspalt wird die Spaltbreite verstanden, die im Querschnitt betrachtet dem Minimumabstand der beiden Blechkanten 4 und 5 entspricht. Zwei Lichtquellen 11,12 beleuchten den Echtspalt, wobei der mehrmals reflektierte Lichtstrahl 13 von der Kamera 20 empfangen wird. Der Lichtstrahl 14 wird im oberen Bereich der linken Kante 4 so reflektiert, dass er von der oberen Kamera 20 nicht erfasst werden kann. Lichtstrahl 15 und Lichtstrahl 16 werden im Bereich der linken Kante 4 und der rechten Kante 5 mehrmals reflektiert, können aber von der Kamera 20 ebenfalls nicht erfasst werden. Mit diesem Verfahren wird die Spaltbreite 7 im oberen Bereich der Blechplatinen 1,2 ermittelt, sie entspricht in der Regel jedoch nicht der Echtspaltbreite.

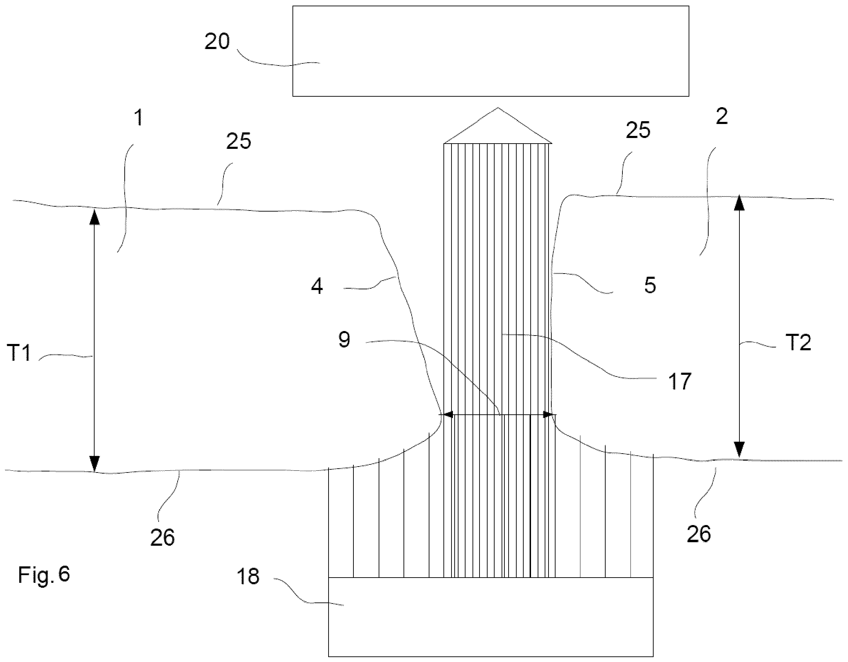

Fig. 6 zeigt nun die Spaltmessung mittels Durchlichtverfahren an zwei Blechplatinen 1,2 mit Echtspalt. Die linke Blechplatine 1, welche die Blechdicke T1 aufweist, mit der Oberseite 25 und der Unterseite 26 und der Kante 4 und die rechte Blechplatine 2, welche die Blechdicke T2 aufweist, mit der Oberseite 25 und der Unterseite 26 und der Kante 5, berühren sich daher nicht. Über die untere Beleuchtung 18 wird Licht 17 von unten durch den Spalt gestrahlt und von der oberen Kamera 20 erfasst. Mit dieser Spaltmessung gemäß Durchlichtverfahren wird die Echt-Spaltbreite 9 gemessen, also der Minimalabstand der beiden Kanten 4 und 5.

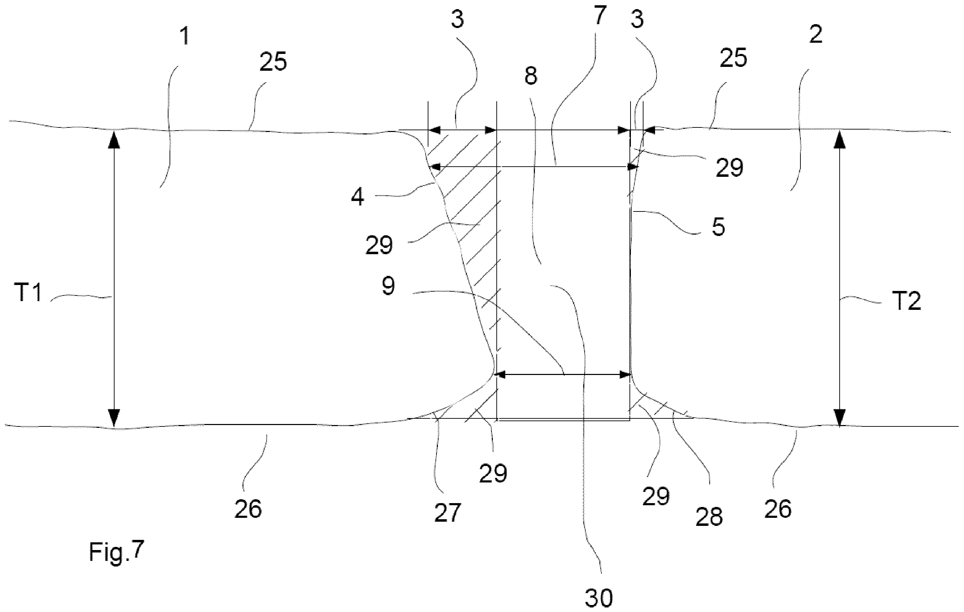

Fig. 7 zeigt nun die Spaltmessung gemäß der Erfindung. Der Spalt wird hier gleichzeitig mit dem Auflichtverfahren (wie in Figur 5 dargestellt) und mit dem Durchlichtverfahren (wie in Figur 6 dargestellt) vermessen. Die beiden Blechplatinen 1,2 berühren sich im vorliegenden Beispiel nicht. Mit der Auflichtmethode wird die Spaltbreite 7 im oberen Bereich der Blechplatinen 1 und 2 gemessen. Mit der Durchlichtmethode wird die Echtspaltbreite 9 ermittelt. Im vorliegenden Beispiel werden die Lichtstrahlen vom Auflichtverfahren und die Lichtstrahlen vom Durchlichtverfahren durch eine gemeinsame Kamera 20 erfasst. Wenn man von der ermittelten Spaltbreite 7 die Echtspaltbreite 9 abzieht, kommt man zur Falsch-Spaltbreite 3. Die Falsch-Spaltfläche 29 ist die Spaltfläche, die sich unter der Falsch-Spaltbreite 3 befindet. Mit Hilfe der Falsch-Spaltbreite 3 und der Blechdicke T1, T2 kann die Falsch-Spaltfläche 29 abgeschätzt werden. Aus der Messung der Echt-Spaltbreite 9 und der bekannten Blechdicke T1, T2 kann die Echt-Spaltfläche 30 bestimmt werden. Die Summe der abgeschätzten Falsch-Spaltfläche 29 und der ermittelten Echt-Spaltfläche 30 ergibt die Fehlfläche 8 und somit kann das Fehlvolumen abgeschätzt werden.

In Figur 1 wird das Auflichtverfahren nicht nur an der Oberseite der Blechplatinen 1,2 angewendet, sondern auch an der Unterseite. Hierzu befinden sich zwei Lichtquellen 38 und 39 unterhalb der Blechplatinen. Die Lichtstrahlen der Lichtquellen 38, 39 werden von den Blechplatinen und vom Spalt reflektiert und von der unteren Kamera 21 erfasst. Ebenso erfasst diese Kamera 21 das Durchlicht der oberen Beleuchtung 19.

### Bezugszeichenliste

- 1: linke Blechplatine
- 2: rechte Blechplatine
- 3: Falsch-Spaltbreite
- 4: Blechkante
- 5: Blechkante
- 6: Schweißlaser
- 7: Spaltbreite gemessen im Auflichtverfahren
- 8: Fehlfläche
- 9: Echt-Spaltbreite
- 10: Fülldraht
- 11,12: Lichtquellen
- 13: Lichtstrahl
- 14: Lichtstrahl
- 15: Lichtstrahl
- 16: Lichtstrahl
- 17: Licht
- 18: untere Beleuchtung
- 19: obere Beleuchtung
- 20: obere Kamera
- 21: untere Kamera
- 22: obere Kamera
- 23: untere Kamera
- 24: Fülldraht-Einheit
- 25: Oberseite Blechplatine
- 26: Unterseite Blechplatine
- 27: Rollover-Links
- 28: Rollover-Rechts
- 29: Falsch-Spaltfläche
- 30: Echt-Spaltfläche
- 31: untere Beleuchtung
- 32: obere Beleuchtung
- 35: Laserschweißprozess
- 36: geschweißte Platine
- 37: Fördereinheit
- 38,39: Lichtquellen
- TR: Transportrichtung
- R: Rollover-Bereich
- S: Schnitt-Bereich
- B: Bruch-Bereich
- G: Grat
- D: Blechabstand
- T1: Blechdicke linke Platine
- T2: Blechdicke rechte Platine

## Patentansprüche

1. Verfahren zum stumpfen Verschweißen von flachen Blechplatinen (1,2) in einer Schweißmaschine, wobei zwei Blechplatinen (1,2) durch Zuführmittel auf einer Fördereinheit (37) platziert und mit Haltemitteln fixiert werden, wobei zwei Kanten (4,5) von zwei miteinander zu verschweißenden Blechplatinen (1,2) unter Bildung eines möglichst geringen Spaltes stumpf aneinandergelegt und mit einem Schweißlaser (6) miteinander verschweißt werden, wobei die Spaltbreite (7) des Spaltes gemessen und mit den Messwerten der Schweißprozess gesteuert wird, **dadurch gekennzeichnet, dass** die Spaltbreite (7) gleichzeitig mittels Auflichtverfahren und die Echtspaltbreite (9) mittels Durchlichtverfahren vermessen wird, und dass dadurch die Fehlfläche (8) bzw. das Fehlvolumen im Spalt abgeschätzt wird.

2. Verfahren nach Anspruch 1, **dadurch gekennzeichnet, dass** es sich beim Auflichtverfahren um ein Laserlinienverfahren, also um ein Lasertriangulationsverfahren, handelt.

3. Verfahren nach einem der Ansprüche 1 oder 2, **dadurch gekennzeichnet, dass** dem Laserschweißprozess (35) Fülldraht (10) zugeführt wird.

4. Verfahren nach Anspruch 3, **dadurch gekennzeichnet, dass** die Fülldrahtzufuhr entsprechend dem abgeschätzten Fehlvolumen gesteuert wird.

5. Verfahren nach einem der Ansprüche 1 bis 4, **dadurch gekennzeichnet, dass** die Auswertung der Messresultate zur Bestimmung des Fehlvolumens zwischen den beiden Kanten (4,5) mittels bildtechnischer Verfahren während des Schweißprozesses erfolgt.

6. Verfahren nach einem der Ansprüche 1 bis 5, **dadurch gekennzeichnet, dass** nach dem Schweißprozess mittels einer Beleuchtung (31, 31) mit dazugehöriger Kamera (22,23) Löcher in der hergestellten Schweißnaht erkannt werden können.

7. Verfahren nach einem der Ansprüche 1 bis 6, **dadurch gekennzeichnet, dass** das Auflichtverfahren Lichtquellen (11,12) für monochromatisches Licht verwendet.

8. Verfahren nach einem der Ansprüche 1 bis 7, **dadurch gekennzeichnet, dass** die Spaltbreite (7) und die Echt-Spaltbreite (9) kontinuierlich gemessen und ausgewertet werden.

9. Verfahren nach einem der Ansprüche 1 bis 6, **dadurch gekennzeichnet, dass** für das Auflichtverfahren und für das Durchlichtverfahren eine gemeinsame Kamera (20) verwendet wird.

10. Verfahren nach einem der Ansprüche 1 bis 8, **dadurch gekennzeichnet, dass** das Auflichtverfahren zur Messung der Spaltbreite (7) auf der Oberseite und der Unterseite der Blechplatinen (1,2) angewendet wird.

11. Verfahren nach einem der Ansprüche 1 bis 8 oder 10, **dadurch gekennzeichnet, dass** das Durchlichtverfahren zur Messung der Echtspaltbreite (9) auf der Oberseite und der Unterseite der Blechplatinen (1,2) angewendet wird.

12. Anwendung des Verfahrens nach einem der Ansprüche 1 bis 11 zur Herstellung von Tailored Blanks im Karosseriebau.

## Claims

1. Method for butt welding of flat metal blanks (1, 2) in a welding machine, where two metal blanks (1, 2) are placed on a conveyor unit (37) by feed devices and secured by holding means, where two edges (4, 5) of two metal blanks (1, 2) to be welded together are placed together to form a butt joint with the smallest possible gap and then welded together using a welding laser (6), the gap width (7) being measured and controlled by means of the measured values from the welding process, **characterized in that** the gap width (7) is measured by means of the reflected-light method and the true gap width (9) is measured simultaneously by means of the transmitted light method, and **in that** the missing area (8) or missing volume in the gap is thereby estimated.

2. Method according to claim 1, **characterized in that** the reflected-light method is a laser line method, hence a laser triangulation method.

3. Method according to one of Claims 1 or 2, **characterized in that** filler wire (10) is fed to the laser welding process (35).

4. Method according to Claim 3, **characterized in that** the filler wire feed is controlled according to the estimated missing volume.

5. Method according to one of claims 1 to 4, **characterized in that** the measuring results are analysed using imaging techniques during the welding process in order to determine the missing volume between the two edges (4, 5).

6. Method according to one of claims 1 to 5, **characterized in that** holes can be detected in the weld produced after the welding process by means of a light (31, 31) and corresponding camera (22, 23).

7. Method according to one of claims 1 to 6, **characterized in that** the reflected-light method uses light sources (11, 12) for monochromatic light.

8. Method according to one of claims 1 to 7, **characterized in that** the gap width (7) and the true gap width (9) are measured and analysed continuously.

9. Method according to one of claims 1 to 6, **characterized in that** a shared camera (20) is used for the reflected-light and the transmitted light methods.

10. Method according to one of claims 1 to 8, **characterized in that** the reflected-light method is used to measure the gap width (7) on the upper side and the lower side of the metal blanks (1, 2).

11. Method according to one of claims 1 to 8 or 10, **characterized in that** the transmitted light method is used to measure the true gap width (9) on the upper side and the lower side of the metal blanks (1, 2).

12. Application of the method according to one of claims 1 to 11 to produce tailored blanks in car body making.

## Revendications

1. Procédé de soudage bout à bout des flans en métal plats (1,2) dans une machine à souder, deux flans en métal (1,2) étant placés sur un ensemble transporteur (37) par des dispositifs d'alimentation et fixés par des moyens de retenue, dans lequel deux bords (4, 5) de deux flans en métal (1,2) devant être soudés l'un à l'autre sont placés ensemble pour former un joint bout à bout formant ainsi le plus petit interstice possible et sont ensuite soudés ensemble à l'aide d'un laser (6) pour le soudage, dans lequel la largeur d'interstice (7) de l'interstice est mesurée et réglée à l'aide des valeurs de mesure du processus de soudage, **caractérisé en ce que** la largeur d'interstice (7) est mesurée au moyen du procédé de lumière réfléchie et la largeur d'interstice réelle (9) est mesurée simultanément au moyen du procédé de lumière transmise, et **en ce que** la zone manquante (8) ou le volume manquant dans l'interstice est ainsi évalué(e).

2. Procédé selon la revendication 1, **caractérisé en ce que** le procédé de lumière réfléchie est un procédé laser linéaire, il s'agit d'un procédé de triangulation laser.

3. Procédé selon l'une des revendications 1 ou 2, **caractérisé en ce que** le fils d'apport (10) est amené au processus de soudage au laser (35).

4. Procédé selon la revendication 3, **caractérisé en ce que** l'amenée du fil d'apport est réglée conformément au volume manquant évalué.

5. Procédé selon l'une des revendications 1 à 4, **caractérisé en ce que** les résultats de mesure sont analysées en faisant appel à des techniques d'imagerie pendant le processus de soudage afin de déterminer le volume manquant entre les deux bords (4,5).

6. Procédé selon l'une des revendications 1 à 5, **caractérisé en ce que** des trous peuvent être détectés dans le cordon de soudure produit après le processus de soudage au moyen d'une lumière (31, 31) et d'une caméra correspondante (22,23).

7. Procédé selon l'une des revendications 1 à 6, **caractérisé en ce que** le procédé de lumière réfléchie utilise des sources de lumière (11,12) pour la lumière monochromatique.

8. Procédé selon l'une des revendications 1 à 7, **caractérisé en ce que** la largeur d'interstice (7) et la largeur d'interstice réelle (9) sont mesurées et analysées de manière continue.

9. Procédé selon l'une des revendications 1 à 6, **caractérisé en ce qu'**une caméra partagée (20) est utilisée pour la lumière réfléchie et les procédés de lumière transmise.

10. Procédé selon l'une des revendications 1 à 8, **caractérisé en ce que** le procédé de lumière réfléchie est utilisée pour mesurer la largeur d'interstice (7) sur le côté supérieur et le côté inférieur des flans en métal (1,2) .

11. Procédé selon l'une des revendications 1 à 8 ou 10, **caractérisé en ce que** le procédé de lumière transmise est utilisée pour mesurer la largeur d'interstice réelle (9) sur le côté supérieur et le côté inférieur des flans en métal (1,2).

12. Utilisation du procédé selon l'une quelconque des revendications 1 à 11 destiné à fabriquer des flans sur mesure pour la fabrication de carrosserie de voiture.
